# FASCICULE DE BREVET EUROPEEN

(11) **EP 2 212 171 B1**
(45) Date de publication et mention de la délivrance du brevet: **20.04.2011**
(21) Numéro de dépôt: 08849430.7
(22) Date de dépôt: 13.11.2008
(51) Int. Cl.: B60T 13/74, B60T 7/04

(54) **SYSTEME DE FREINAGE ELECTRIQUE POUR UN VEHICULE AUTOMOBILE**
ELEKTRISCHES BREMSSYSTEM FÜR EIN KRAFTFAHRZEUG
ELECTRIC BRAKING SYSTEM FOR A MOTOR VEHICLE

(30) Priorité: 13.11.2007 FR 0707957
(43) Date de publication de la demande: 04.08.2010
(73) Titulaire: Renault S.A.S., 92100 Boulogne-Billancourt (FR)
(72) Inventeur: DANG VAN NHAN, Christophe, F-94800 Villejuif (FR)
(74) Mandataire: Rougemont, Bernard
(86) Numéro de dépôt international: PCT/EP2008/065442
(87) Numéro de publication internationale: WO 2009/062991

(56) Documents cités:
- EP-A- 0 532 847
- WO-A-00/29268
- WO-A-02/46014
- DE-A1- 19 832 167
- FR-A- 2 711 342
- FR-A- 2 768 980
- US-A- 257 302
- US-A- 2 590 034
- US-A- 4 721 344

## Description

La présente invention concerne un système de freinage selon le préambule de la revendication 1 et un procédé de fonctionnement d'un tel système.

Avec un système de freinage électrique, le conducteur est isolé du frein en ce qui concerne la force, ce qui signifie que la demande de couple de freinage provenant du conducteur n'est plus transmise directement sous forme de pression au moyen d'un système hydraulique, mais uniquement sous forme d'un signal au moyen d'une ligne électrique. Un actionneur de frein électrique est commandé par ce signal, cet actionneur exerçant sur un frein, à l'aide d'une alimentation en énergie électrique, une force qui produit le couple de freinage souhaité au moyen d'un élément de frottement. Dans le cas d'un frein à disque, la force produisant le couple resserre des plaquettes de frein contre un disque solidaire de la roue et dans le cas d'un frein à tambour, la force produisant le couple écarte des segments de frein contre une surface intérieure d'un tambour solidaire de la roue.

L'actionneur de frein est monté directement à proximité de la roue considérée du véhicule, de façon telle qu'avantageusement, la force de serrage de cette roue n'est pas transmise dans le véhicule sur des étendues importantes, tandis que les dispositifs servant à détecter la demande de couple de freinage du conducteur et la commande de frein sont disposés en un emplacement central, par exemple au voisinage de la pédale de frein. Le système de freinage est ainsi réparti sur l'ensemble du véhicule.

La détermination de la demande de couple de freinage du conducteur et la commande de système sont, en tant qu'éléments centralisés, d'une grande importance pour la sécurité du système de freinage. La pédale de frein comportant les capteurs constitue la seule source permettant de détecter le souhait de freinage du conducteur. A partir de celle-ci, la demande de freinage du conducteur est calculée. On comprend qu'étant donnée la fonction assurée par le système de freinage, il est nécessaire que toute requête de freinage formulée par le conducteur soit interprétée correctement par le système et soit mise en oeuvre au niveau des actionneurs électriques de freinage sans erreur. Ainsi, le dispositif d'interprétation de la requête doit être au moins tolérant à une faute et le dispositif de transmission d'ordres de commande aux actionneurs de frein doit aussi être au moins tolérant à une faute.

Réaliser un tel dispositif peut être coûteux dans un contexte automobile, et nécessite de trouver le compromis le plus juste entre sécurité et coût.

On connaît de la demande FR 2 768 980 463 un système tolérant aux fautes (en anglais « Fault-Tolerant »). Il repose massivement sur la redondance de composants. Ainsi, il comprend :
- trois capteurs couplés à une pédale de frein,
- trois calculateurs pour interpréter la volonté du conducteur en fonction des signaux issus de ces capteurs et pour la traduire en consignes ou ordres de commande des actionneurs et, enfin,
- deux canaux de communication pour transmettre les consignes vers les actionneurs.

Un tel système est complexe et est, par conséquent, onéreux à produire.

Le but de l'invention est de fournir un système de commande d'actionneurs électriques de freinage obviant aux inconvénients identifiés précédemment et améliorant les systèmes de commande d'actionneurs connus de l'art antérieur. L'invention propose un système de freinage selon la revendication 1 et un procédé de fonctionnement d'un tel système de freinage, selon la revendication 14.

Selon l'invention, le système de commande de l'activation d'un actionneur électrique de freinage comprend un premier dispositif pour convertir une manoeuvre d'un organe manoeuvrable par un conducteur en un ordre de commande d'activation de l'actionneur électrique de freinage et un deuxième dispositif pour convertir une manoeuvre de l'organe manoeuvrable par le conducteur en un ordre de commande d'activation de l'actionneur électrique de freinage. Il est caractérisé en ce que le deuxième dispositif n'émet aucun ordre d'activation de l'actionneur électrique tant qu'une valeur seuil d'un paramètre relatif à l'organe manoeuvrable n'est pas franchie et émet un ordre d'activation de l'actionneur électrique indépendant de la valeur du paramètre dès que la valeur seuil du paramètre est franchie.

Le paramètre peut être la position de l'organe manoeuvrable ou un effort appliqué sur l'organe manoeuvrable.

Le deuxième dispositif peut comprendre un interrupteur couplé à l'organe manoeuvrable.

L'interrupteur peut être du type normalement fermé.

L'interrupteur peut être monté en parallèle avec une résistance.

Le deuxième dispositif peut comprendre une source de courant et un interrupteur commandé pour alimenter la résistance.

Selon l'invention, le système de freinage comprend un système de commande défini précédemment, un organe manoeuvrable par un conducteur pour commander un freinage et au moins un actionneur électrique de freinage.

L'organe manoeuvrable peut être une pédale.

L'au moins un actionneur électrique peut comprendre un moyen de détection d'un dysfonctionnement du premier dispositif.

Le système de freinage peut comprendre deux actionneurs électriques de freinage.

Chaque actionneur électrique peut comprendre un moyen pour détecter un état de l'autre actionneur électrique.

Le système de freinage peut comprendre un système de commande défini précédemment et au moins un actionneur électrique peut comprendre un moyen de mesure d'une tension aux bornes de la résistance.

L'au moins un actionneur électrique peut comprendre un moyen de commande de l'interrupteur commandé.

Selon l'invention, un véhicule automobile comprend un système de freinage défini précédemment.

Selon l'invention, un procédé de fonctionnement d'un système de freinage défini précédemment est caractérisé en ce qu'en cas de dysfonctionnement du premier dispositif et en cas de manoeuvre de l'organe de sorte à ce qu'une valeur seuil d'un paramètre relatif à l'organe manoeuvrable est franchie, on déclenche une activation de l'au moins un actionneur électrique de freinage, cette activation étant indépendante de la valeur de ce paramètre.

L'activation peut suit de préférence une loi de freinage prédéterminée.

Le dessin annexé représente, à titre d'exemples, deux modes de réalisation d'un système de commande d'actionneurs de freinage selon l'invention.
La figure 1 est un schéma d'un système électrique de freinage comprenant un premier mode de réalisation d'un système de commande d'actionneurs selon l'invention.
La figure 2 est un schéma d'un système électrique de freinage comprenant un deuxième mode de réalisation d'un système de commande d'actionneurs selon l'invention.

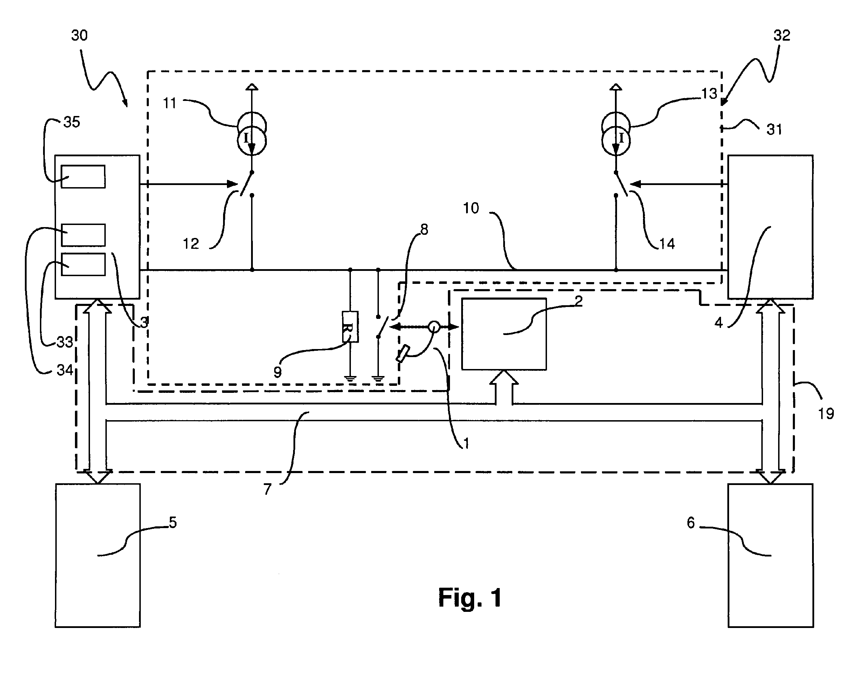

Un premier système de freinage 30 représenté à la figure 1 comprend principalement un organe manoeuvrable 1 par un conducteur du véhicule tel qu'une pédale de frein, des actionneurs électriques de freinage avant gauche 3, avant droit 4, arrière gauche 5 et arrière droit 6 et un premier mode de réalisation d'un système de commande 32 des actionneurs électriques. Les actionneurs électriques permettent d'appliquer une force sur des éléments de friction pour les faire frotter contre des éléments solidaires des roues et produire ainsi des couples de freinage.

Le système 32 de commande des actionneurs électriques comprend un premier dispositif de commande 19 permettant de convertir une manoeuvre de la pédale de frein en une consigne ou un ordre de commande d'activation des actionneurs électriques de freinage 3, 4, 5, 6 et de transmettre cet ordre aux actionneurs et un deuxième dispositif de commande 31 permettant de convertir une manoeuvre de la pédale de frein en une consigne ou un ordre de commande d'activation des actionneurs électriques de freinage avant 3, 4 et de transmettre cet ordre aux actionneurs. Alternativement, tous les actionneurs 3, 4, 5 et 6 peuvent aussi être commandés via le deuxième dispositif de commande. Les deux dispositifs sont indépendants.

Le premier dispositif de commande 19 comprend un moyen 2 de détermination de l'action qu'exerce le conducteur sur la pédale et de le transformer en des ordres de commande des actionneurs électriques 3, 4, 5 et 6 qui sont acheminés jusqu'aux actionneurs par un moyen 7 de communication. Le moyen de détermination comprend un capteur couplé à la pédale de frein comme par exemple un capteur d'effort appliqué sur la pédale ou un capteur de position de la pédale et comprend un moyen électronique pour convertir un signal issu de ce capteur en des ordres de commande des actionneurs électriques. Le moyen électronique peut aussi utiliser d'autres informations en plus du signal issu du capteur pour établir les ordres de commande des actionneurs. Ce premier dispositif de commande est silencieux aux défaillances (en anglais « Fail-Silent »), c'est-à-dire qu'en cas de défaillance ou d'erreur détectée du dispositif, celui-ci ne transmet aucun ordre de commande des actionneurs et ainsi aucune force de freinage n'est appliquée au véhicule. Pour ce faire, chaque actionneur comprend un moyen 33 de détection des dysfonctionnements du premier dispositif de commande (représenté uniquement à la figure 1 dans l'actionneur 3). Ces moyens de détection permettent aux actionneurs de n'exécuter aucun ordre en provenance du premier dispositif de commande lorsqu'un dysfonctionnement est détecté.

Il est proposé d'ajouter, dans le système de commande 32, le deuxième dispositif de commande 31 permettant de convertir une manoeuvre de la pédale de frein en une consigne ou un ordre de commande des actionneurs électriques de freinage avant 3, 4. Ce deuxième dispositif est un système simple et peu couteux permettant de rendre le système de commande 32 tolérant aux fautes. On suppose pour cela qu'il est acceptable d'assurer un freinage sur les deux seules roues avant du véhicule selon une logique binaire déclenchant une loi prédéterminée de freinage en cas de défaillance du premier dispositif de commande et de requête de freinage par l'utilisateur.

Le deuxième dispositif de commande comprend un capteur de manoeuvre de pédale de frein totalement indépendant du moyen de détermination 2 décrit précédemment. Ce capteur permet de déterminer si le conducteur exerce ou non une action sur la pédale de frein (pédale appuyée ou non). En fonction de l'état de ce capteur, un ordre de commande est envoyé aux actionneurs avant 3 et 4. Cet ordre est transmis aux actionneurs par un moyen 10 totalement indépendant du moyen 7 décrit précédemment. En outre, le deuxième dispositif de commande est interfacé de façon à ce que les actionneurs de frein avant exécutent un ordre de commande de freinage uniquement si ils sont tous deux en capacité de freiner et d'accord sur le fait qu'il faille exécuter une action de freinage suite à une défaillance du premier dispositif de commande.

Dans un premier mode de réalisation du système de commande (représenté à la figure 1), le deuxième dispositif de commande comprend :
- un interrupteur normalement fermé 8, qui s'ouvre lorsque l'on appuie sur la pédale au-delà d'un certain seuil (par exemple un seuil d'effort appliqué sur la pédale ou un seuil de position de la pédale). On utilise de préférence un interrupteur réagissant à un seuil d'effort si le moyen 2 comprend un capteur de déplacement et un interrupteur réagissant à un seuil de position si le moyen 2 comprend un capteur d'effort. Une première borne de l'interrupteur est reliée à la masse,
- une résistance 9 de valeur R placée en parallèle de l'interrupteur 8,
- une ligne électrique 10 qui relie la deuxième borne de l'interrupteur à une entrée sur chacun des deux actionneurs de frein avant,
- une source de courant 11, qui injecte un courant d'intensité I dans la ligne 10 au travers d'un interrupteur normalement ouvert 12 commandé par l'actionneur de frein avant gauche 3, l'actionneur de frein avant gauche comprenant pour ce faire un module 35 de commande de l'interrupteur 12, et
- une source de courant 13, qui injecte un courant d'intensité I dans la ligne 10 au travers d'un interrupteur normalement ouvert 14 commandé par l'actionneur de frein avant droit 4, l'actionneur de frein avant droit comprenant pour ce faire un module (non représenté) de commande de l'interrupteur 14.

Chaque actionneur de frein avant peut fonctionner selon trois modes :
- un mode nominal dans lequel il est lui-même opérationnel (c'est-à-dire capable d'exercer une action de freinage si nécessaire) et dans lequel il constate grâce au moyen 33 que le premier dispositif de commande n'est pas défaillant : dans ce mode, l'actionneur n'active pas la fermeture de l'interrupteur commandé permettant l'alimentation de la ligne 10 par une source de courant,
- un mode dégradé dans lequel il est lui-même opérationnel mais dans lequel il constate grâce au moyen 33 que le premier dispositif de commande est défaillant : dans ce mode, l'actionneur active la fermeture de l'interrupteur commandé permettant l'alimentation de la ligne 10 par une source de courant et se tient prêt à freiner selon une loi de freinage prédéterminée et déclenchée par l'ouverture de l'interrupteur 8 (qui provoque l'apparition d'un potentiel sur la ligne 10, ce potentiel de la ligne 10 étant détecté par un moyen de mesure de tension 34 dans les actionneurs 3 et 4), et
- un mode silencieux dans lequel il n'est lui-même pas opérationnel (dans l'incapacité d'exercer une action de freinage), le deuxième dispositif de commande est alors inactif par défaut : l'interrupteur commandé permettant l'injection de courant dans la ligne est alors ouvert.

En mode dégradé, chaque actionneur de frein avant répond à un ordre commande de freinage donné par l'état fermé de l'interrupteur 8 de la façon suivante :
si la tension mesurée (par le moyen 34) sur la ligne 10 est nulle, c'est que l'interrupteur 8 est fermé, donc que la pédale n'est pas appuyée, donc qu'il ne faut pas freiner,
si la tension mesurée sur la ligne 10 vaut RI, c'est que l'interrupteur 8 est ouvert, donc que la pédale est appuyée, mais que l'autre actionneur de frein avant n'est pas en mode dégradé (sinon on mesurerait une tension 2RI), donc qu'il ne faut pas freiner, car l'autre actionneur de frein avant n'est pas prêt à répondre à l'ordre de commande de freinage de manière synchrone (car il n'est pas en mode dégradé),
si la tension mesurée sur la ligne 10 vaut 2RI, c'est que l'interrupteur 8 est ouvert, donc que la pédale est appuyée, et que l'autre actionneur de frein avant est aussi en mode dégradé, donc qu'il faut freiner, car l'autre actionneur de frein avant peut lui aussi répondre à l'ordre de commande de freinage de manière synchrone (car il est en mode dégradé).

Grâce à ce deuxième dispositif de commande très simple, permettant le déclenchement synchrone d'un freinage sur les deux roues avant, indépendant du premier dispositif de commande, il est possible de relâcher la contrainte de robustesse de ce dernier, en lui autorisant de n'être que silencieux en cas de défaillance (« Fail-Silent ») plutôt que tolérant aux fautes (« Fault-Tolerant »). On fait, du coup, l'économie du doublage du moyen de communication et du triplage du moyen de détermination.

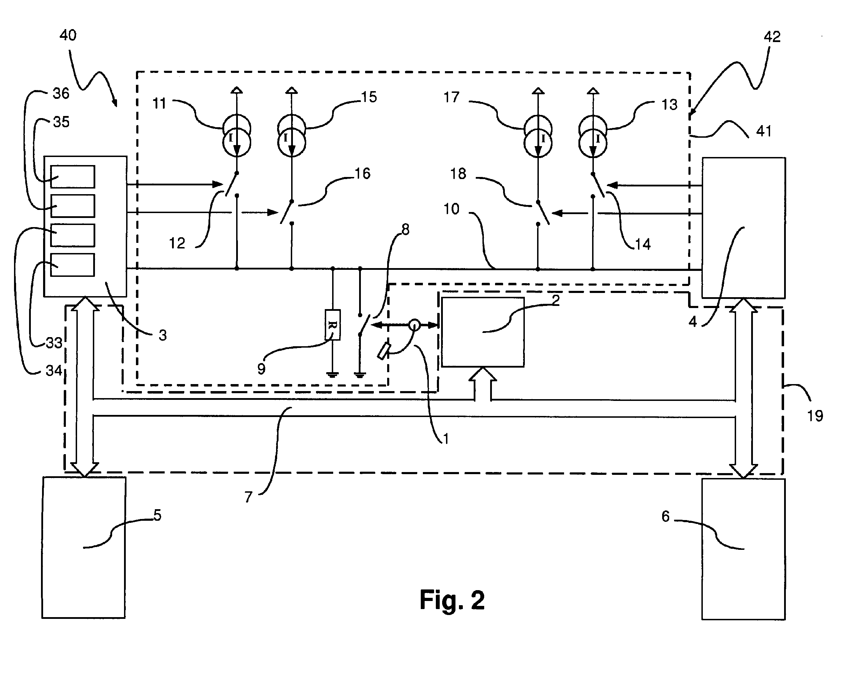

Dans un deuxième mode de réalisation du système de commande 42 (représenté à la figure 2), le deuxième dispositif de commande 41 diffère du dispositif de commande décrit en référence à la figure 1 en ce qu'il comprend en outre :
- une source de courant 15, qui injecte un courant d'intensité I dans la ligne 10 au travers d'un interrupteur normalement ouvert 16 commandé par l'actionneur de frein avant gauche 3, l'actionneur avant gauche comprenant un module de commande de cet interrupteur, et
- une source de courant 17, qui injecte un courant d'intensité I dans la ligne 10 au travers d'un interrupteur normalement ouvert 18 commandé par l'actionneur de frein avant droit 4, l'actionneur avant droit comprenant un module de commande de cet interrupteur.

Les interrupteurs commandés 12 et 14 sont commandés comme décrit précédemment en référence au premier mode de réalisation, selon les modes nominal, dégradé, et silencieux.

Chaque interrupteur 16 et 18 est commandé respectivement par l'actionneur de frein avant gauche et par l'actionneur de frein avant droit selon ces trois modes :
en mode nominal, l'interrupteur 16, 18 est fermé et un courant d'intensité I est injecté dans la ligne 10,
en mode dégradé, l'interrupteur 16, 18 est fermé et un courant d'intensité I est injecté dans la ligne 10, en plus d'un courant d'intensité I injecté par l'interrupteur 12, 14,
en mode silencieux, l'interrupteur 16, 18 est ouvert (état par défaut) et aucun courant n'est injecté dans la ligne 10.

En mode dégradé, chaque actionneur de frein avant répond à un ordre commande de freinage donné par l'état fermé de l'interrupteur 8 de la façon suivante :
si la tension mesurée sur la ligne 10 est nulle, c'est que l'interrupteur 8 est fermé, donc que la pédale n'est pas appuyée, donc qu'il ne faut pas freiner,
si la tension mesurée sur la ligne 10 vaut 2RI, c'est que l'interrupteur 8 est ouvert, donc que la pédale est appuyée, mais que l'autre actionneur de frein avant est en mode silencieux (car il n'injecte aucun courant), donc qu'il ne faut pas freiner, car l'autre actionneur de frein avant n'est pas prêt à répondre à l'ordre de commande de freinage de manière synchrone (car il n'est pas en mode dégradé),
si la tension mesurée sur la ligne 10 vaut 3RI, c'est que l'interrupteur 8 est ouvert, donc que la pédale est appuyée, mais que l'autre actionneur de frein est en mode nominal car il injecte un courant d'intensité I, donc qu'il ne faut pas freiner, car l'autre actionneur de frein avant n'est pas prêt à répondre à l'ordre de commande de freinage de manière synchrone (car il n'est pas en mode dégradé),
si la tension mesurée sur la ligne 10 vaut 4RI, c'est que l'interrupteur 8 est ouvert, donc que la pédale est appuyée, et que l'autre actionneur de frein avant est aussi en mode dégradé (car il injecte un courant d'intensité 2I), donc qu'il faut freiner, car l'autre actionneur de frein avant répondra lui aussi à l'ordre de commande de freinage de manière synchrone (car il est en mode dégradé).

En mode nominal, sachant qu'il y a toujours un courant injecté sur la ligne 10, chaque actionneur de frein avant peut observer les commutations de l'interrupteur 8 et ainsi assurer un diagnostic continu de cet interrupteur de secours par corrélation avec la consigne fournie par le premier dispositif de commande 19.

On observe clairement que l'invention permet de répondre à la fois aux besoins fonctionnels et aux exigences de sécurité, en ne recourant qu'à des éléments simples et peu coûteux. En effet, il est possible de réaliser selon l'invention un système tolérant aux fautes.

En cas de défaillance du premier dispositif de commande et de requête de freinage par l'utilisateur, les actionneurs fonctionnant en mode dégradé sont activés pour réaliser, de manière binaire, un freinage selon une loi de freinage prédéterminée ou éventuellement déterminée en fonction de paramètres dynamiques du véhicule, mais ne dépendant pas de la nature de l'action du conducteur sur la pédale. La loi de freinage peut par exemple comprendre une force de freinage appliquée par les actionneurs et évoluant de manière continue dans le temps, par exemple selon une rampe ou selon une courbe exponentielle. Cette loi de freinage sera prédéterminée de manière à ce que le véhicule reste contrôlable. De préférence, cette loi de freinage est appliquée tant que l'on détecte une action sur la pédale de freinage. Il est, de préférence, mis fin à cette loi de freinage dès que l'on détecte que la pédale de frein n'est plus activée ou dès que l'on détecte que le premier dispositif de commande n'est plus défaillant.

## Revendications

1. Système de freinage (30, 40) comprenant un organe manoeuvrable (1) par un conducteur pour commander un freinage, au moins un actionneur (3) électrique de freinage, ainsi qu'un système de commande (32 ; 42) de l'activation de l'actionneur électrique de freinage (3), ledit système de commande comprenant un premier dispositif (19) pour convertir une manoeuvre de l'organe (1) manoeuvrable par un conducteur en un ordre de commande d'activation de l'actionneur électrique de freinage et un deuxième dispositif (31 ; 41) pour convertir une manoeuvre de l'organe manoeuvrable par le conducteur en un ordre de commande d'activation de l'actionneur électrique de freinage, le deuxième dispositif n'émet aucun ordre d'activation de l'actionneur électrique tant qu'une valeur seuil d'un paramètre relatif à l'organe manoeuvrable n'est pas franchie et émet un ordre d'activation de l'actionneur électrique indépendant de la valeur du paramètre dès que la valeur seuil du paramètre est franchie, **caractérisé en ce que** l'actionneur de frein peut fonctionner selon trois modes :
- un mode nominal dans lequel il est lui-même opérationnel c'est-à-dire capable d'exercer une action de freinage si nécessaire,
- un mode dégradé dans lequel il est lui-même opérationnel mais dans lequel il constate grâce à un moyen que le premier dispositif est défaillant, et
- un mode silencieux dans lequel il n'est lui-même pas opérationnel c'est-à-dire dans l'incapacité d'exercer une action de freinage.

2. Système de freinage selon la revendication 1, **caractérisé en ce que** le paramètre est la position de l'organe manoeuvrable ou un effort appliqué sur l'organe manoeuvrable.

3. Système de freinage selon l'une des revendications précédentes, **caractérisé en ce que** le deuxième dispositif comprend un interrupteur (8) couplé à l'organe manoeuvrable.

4. Système de freinage selon la revendication précédente, **caractérisé en ce que** l'interrupteur est du type normalement fermé.

5. Système de freinage selon la revendication précédente, **caractérisé en ce que** l'interrupteur est monté en parallèle avec une résistance (9).

6. Système de freinage selon la revendication précédente, **caractérisé en ce que** le deuxième dispositif comprend une source de courant (11, 13 ; 15, 17) et un interrupteur commandé (12, 14 ; 16, 18) pour alimenter la résistance.

7. Système de freinage selon l'une des revendications précédentes, **caractérisé en ce que** l'organe manoeuvrable est une pédale.

8. Système de freinage selon l'une des revendications précédentes, **caractérisé en ce que** l'au moins un actionneur électrique comprend un moyen (33) de détection d'un dysfonctionnement du premier dispositif.

9. Système de freinage selon l'une des revendications précédentes, **caractérisé en ce qu'**il comprend deux actionneurs (3, 4) électriques de freinage.

10. Système de freinage selon la revendication précédente, **caractérisé en ce que** chaque actionneur électrique (3) comprend un moyen (34) pour détecter un état de l'autre actionneur électrique (4).

11. Système de freinage selon l'une des revendications 5 ou 6, **caractérisé en ce que** l'au moins un actionneur électrique comprend un moyen de mesure d'une tension aux bornes de la résistance.

12. Système de freinage selon la revendication 11, **caractérisé en ce que** l'au moins un actionneur électrique comprend un moyen (35) de commande de l'interrupteur commandé.

13. Véhicule automobile comprenant un système de freinage selon l'une des revendications précédentes.

14. Procédé de fonctionnement d'un système de freinage (30 ; 40) selon l'une des revendications précédentes, **caractérisé en ce qu'**en cas de dysfonctionnement du premier dispositif (19) et en cas de manoeuvre de l'organe de sorte à ce qu'une valeur seuil d'un paramètre relatif à l'organe manoeuvrable est franchie, on déclenche une activation de l'au moins un actionneur électrique de freinage, cette activation étant indépendante de la valeur de ce paramètre.

15. Procédé de fonctionnement selon la revendication précédente, **caractérisé en ce que** l'activation suit une loi de freinage prédéterminée.

## Claims

1. Braking system (30, 40) comprising a member (1) that can be operated by a driver to order a braking, at least one electric braking actuator (3), and a control system (32; 42) for activating the electric braking actuator (3), said control system comprising a first device (19) for converting an operation of the member (1) that can be operated by a driver into a command to control the activation of the electric braking actuator and a second device (31; 41) for converting an operation of the member that can be operated by the driver into a command to control the activation of the electric braking actuator, the second device emits no command to activate the electric actuator as long as a threshold value of a parameter relating to the operable member is not crossed and emits a command to activate the electric actuator independently of the value of the parameter as soon as the threshold value of the parameter is crossed, **characterized in that** the brake actuator can operate in three modes:
- a nominal mode in which it is itself operational, that is to say, capable of exerting a braking action if necessary,
- a degraded mode in which it is itself operational but in which it confirms by virtue of a means that the first device is defective, and
- a silent mode in which it is itself not operational, that is to say incapable of exerting a braking action.

2. Braking system according to Claim 1, **characterized in that** the parameter is the position of the operable member or a force applied to the operable member.

3. Braking system according to one of the preceding claims, **characterized in that** the second device comprises a switch (8) coupled to the operable member.

4. Braking system according to the preceding claim, **characterized in that** the switch is of the normally-closed type.

5. Braking system according to the preceding claim, **characterized in that** the switch is mounted in parallel with a resistor (9).

6. Braking system according to the preceding claim, **characterized in that** the second device comprises a current source (11, 13; 15, 17) and a control switch (12, 14; 16, 18) to power the resistor.

7. Braking system according to one of the preceding claims, **characterized in that** the operable member is a pedal.

8. Braking system according to one of the preceding claims, **characterized in that** the at least one electric actuator comprises a means (33) for detecting a malfunction of the first device.

9. Braking system according to one of the preceding claims, **characterized in that** it comprises two electric braking actuators (3, 4).

10. Braking system according to the preceding claim, **characterized in that** each electric actuator (3) comprises a means (34) for detecting a state of the other electric actuator (4).

11. Braking system according to one of Claims 5 or 6, **characterized in that** the at least one electric actuator comprises a means for measuring a voltage at the terminals of the resistor.

12. Braking system according to Claim 11, **characterized in that** at the least one electric actuator comprises a means (35) of controlling the controlled switch.

13. Motor vehicle comprising a braking system according to one of the preceding claims.

14. Method of operating a braking system (30; 40) according to one of the preceding claims, **characterized in that**, in case of malfunction of the first device (19) and in case of operation of the member such that a threshold value of a parameter relating to the operable member is crossed, an activation of the at least one electric braking actuator is triggered, this activation being independent of the value of this parameter.

15. Operating method according to the preceding claim, **characterized in that** the activation follows a predetermined braking law.

## Patentansprüche

1. Bremssystem (30, 40), das ein von einem Fahrer zur Steuerung eines Bremsvorgangs betätigbares Organ (1), mindestens einen elektrischen Bremssteller (3), sowie ein Steuersystem (32; 42) der Aktivierung des elektrischen Bremsstellers (3) enthält, wobei das Steuersystem eine erste Vorrichtung (19) zum Umwandeln einer Betätigung des von einem Fahrer betätigbaren Organs (1) in einen Aktivierungssteuerbefehl des elektrischen Bremsstellers und eine zweite Vorrichtung (31; 41) zum Umwandeln einer Betätigung des vom Fahrer betätigbaren Organs in einen Aktivierungssteuerbefehl des elektrischen Bremsstellers enthält, wobei die zweite Vorrichtung keinen Aktivierungsbefehl des elektrischen Stellers ausgibt, so lange ein Schwellwert eines Parameters bezüglich des betätigbaren Organs nicht überschritten wird, und einen Aktivierungsbefehl des elektrischen Stellers unabhängig vom Wert des Parameters ausgibt, sobald der Schwellwert des Parameters überschritten wird, **dadurch gekennzeichnet, dass** der Bremssteller gemäß drei Betriebsarten arbeiten kann:
- eine Nennbetriebsart, in der er selbst betriebsbereit, d.h. fähig ist, wenn nötig eine Bremsaktion durchzuführen,
- eine Notlauf-Betriebsart, in der er selbst betriebsbereit ist, in der er aber mit Hilfe einer Einrichtung feststellt, dass die erste Vorrichtung ausgefallen ist, und
- eine stummgeschaltete Betriebsart, in der er selbst nicht betriebsbereit, d.h. unfähig ist, eine Bremsaktion durchzuführen.

2. Bremssystem nach Anspruch 1, **dadurch gekennzeichnet, dass** der Parameter die Stellung des betätigbaren Organs oder eine auf das betätigbare Organ ausgeübte Kraft ist.

3. Bremssystem nach einem der vorhergehenden Ansprüche, **dadurch gekennzeichnet, dass** die zweite Vorrichtung einen Schalter (8) enthält, der mit dem betätigbaren Organ gekoppelt ist.

4. Bremssystem nach dem vorhergehenden Anspruch, **dadurch gekennzeichnet, dass** der Schalter vom stromlos geschlossenen Typ ist.

5. Bremssystem nach dem vorhergehenden Anspruch, **dadurch gekennzeichnet, dass** der Schalter mit einem Widerstand (9) parallelgeschaltet ist.

6. Bremssystem nach dem vorhergehenden Anspruch, **dadurch gekennzeichnet, dass** die zweite Vorrichtung eine Stromquelle (11, 13; 15, 17) und einen gesteuerten Schalter (12, 14; 16, 18) enthält, um den Widerstand zu speisen.

7. Bremssystem nach einem der vorhergehenden Ansprüche, **dadurch gekennzeichnet, dass** das betätigbare Organ ein Pedal ist.

8. Bremssystem nach einem der vorhergehenden Ansprüche, **dadurch gekennzeichnet, dass** der mindestens eine elektrische Steller eine Einrichtung (33) zur Erfassung einer Fehlfunktion der ersten Vorrichtung enthält.

9. Bremssystem nach einem der vorhergehenden Ansprüche, **dadurch gekennzeichnet, dass** es zwei elektrische Bremssteller (3, 4) enthält.

10. Bremssystem nach dem vorhergehenden Anspruch, **dadurch gekennzeichnet, dass** jeder elektrische Steller (3) eine Einrichtung (34) enthält, um einen Zustand des anderen elektrischen Stellers (4) zu erfassen.

11. Bremssystem nach einem der Ansprüche 5 oder 6, **dadurch gekennzeichnet, dass** der mindestens eine elektrische Steller eine Einrichtung zur Messung einer Spannung an den Klemmen des Widerstands enthält.

12. Bremssystem nach Anspruch 11, **dadurch gekennzeichnet, dass** der mindestens eine elektrische Steller eine Einrichtung (35) zur Steuerung des gesteuerten Schalters enthält.

13. Kraftfahrzeug, das ein Bremssystem nach einem der vorhergehenden Ansprüche enthält.

14. Betriebsverfahren eines Bremssystems (30; 40) nach einem der vorhergehenden Ansprüche, **dadurch gekennzeichnet, dass** im Fall einer Fehlfunktion der ersten Vorrichtung (19) und im Fall einer Betätigung des Organs derart, dass ein Schwellwert eines Parameters bezüglich des betätigbaren Organs überschritten wird, eine Aktivierung des mindestens einen elektrischen Bremsstellers ausgelöst wird, wobei diese Aktivierung vom Wert dieses Parameters unabhängig ist.

15. Betriebsverfahren nach dem vorhergehenden Anspruch, **dadurch gekennzeichnet, dass** die Aktivierung einem vorbestimmten Bremsgesetz folgt.
